# EUROPÄISCHE PATENTSCHRIFT

(11) **EP 0 729 772 B1**
(45) Veröffentlichungstag und Bekanntmachung des Hinweises auf die Patenterteilung: **05.09.2001**
(21) Anmeldenummer: 96101957.7
(22) Anmeldetag: 10.02.1996
(51) Int. Cl.: B01D 1/00, B01D 1/26, B01D 1/22, C13F 1/00, C13G 1/00, C13G 1/06

(54) **Verdampfer**
Evaporator
Evaporateur

(30) Priorität: 03.03.1995 DE 29503589 U
(43) Veröffentlichungstag der Anmeldung: 04.09.1996
(73) Patentinhaber: Balcke-Dürr Energietechnik GmbH, 46049 Oberhausen (DE)
(72) Erfinder: Borg, Heinz, D-44625 Herne (DE); Morgenroth, Boris, D-13156 Berlin (DE); Niepoth, Klaus, D-47495 Rheinberg (DE)
(74) Vertreter: Stenger, Watzke & Ring Patentanwälte

(56) Entgegenhaltungen:
- EP-A- 0 530 001
- DE-A- 2 309 161
- DE-A- 2 400 660
- DE-A- 3 133 803
- US-A- 1 799 478
- US-A- 3 901 768
- US-A- 4 217 176
- US-A- 4 366 027

## Beschreibung

Die Erfindung betrifft einen Verdampfer für die Zuckerindustrie zum Eindicken von Zuckerlösung mit mindestens zwei Wärmeübertragem, die vom einzudickenden Produkt nacheinander durchströmt werden, wobei der zuerst durchströmte Wärmeübertrager zwecks Ausscheidens von Wasseranteilen (Brüden) aus dem Produkt mit Heizdampf und der bzw. die andere(n) Wärmeübertrager mit diesen Brüden beheizt werden, die im oberen Teil des zuerst vom Produkt durchströmten Wärmeübertragers abgezogen werden, wogegen das eingedickte Produkt jeweils im unteren Teil jedes Wärmeübertragers abgezogen wird und seitlich oberhalb jedes Produktabzuges Kondensatstutzen zum Abzug von Kondensat angeordnet sind.

Bei derartigen, in der Zuckerindustrie zum Eindicken von Zuckerlösungen bekannten Verdampfern wird der zuerst von der Zuckerlösung durchströmte Wärmeübertrager mit einer Menge von 100 bis 150 Tonnen Heizdampf pro Stunde beheizt. Da dieser Heizdampf im ersten Wärmeübertrager vollständig kondensiert wird, fallen 100 bis 150 Tonnen Wasser pro Stunde an, die außer der eingedickten Zuckerlösung und den aus ihr ausgeschiedenen Brüden kontinuierlich abgezogen werden müssen. Derartige Verdampfer werden somit von ganz erheblichen Produkt-, Heizdampf- und Kondensatmengen durchströmt.

Der Erfindung liegt die **Aufgabe** zugrunde, einen für die Zuckerindustrie bestimmten Verdampfer der eingangs beschriebenen Art derart weiterzubilden, daß bei einer Verringerung der Bau- und Betriebskosten gleichzeitig die Wärme- und Druckverluste sowie der Energieverbrauch reduziert werden und der Durchlauf der einzudickenden Zuckerlösung mit einfachen Mitteln gezielt gesteuert bzw. geregelt werden kann.

Die **Lösung** dieser Aufgabenstellung ist dadurch gekennzeichnet, daß die Wärmeübertrager übereinander in einem gemeinsamen Gehäuse angeordnet sind, daß die im zuerst vom Produkt durchströmten Wärmeübertrager entstehenden Brüden aus einem an der Oberseite des Gehäuses angeordneten Brüdenstutzen abgezogen und über eine Verbindungsleitung durch einen seitlichen Stutzen dem jeweils unteren Wärmeübertrager zugeführt werden und daß das in einer Auffangwanne des oberen Wärmeübertragers aufgefangene Produkt über eine seitlich außerhalb des Gehäuses angeordnete Meß- und Regeleinrichtung dem Produkteintritt des nachfolgenden Wärmeübertragers zugeführt wird.

Durch die Anordnung der Wärmeübertrager übereinander in einem gemeinsamen Gehäuse ergeben sich nicht nur eine Minimierung der Aufstellfläche und damit der Fundamentkosten, sondern neben einer erheblichen Verkürzung der Verbindungsleitungen auch der Wegfall von Pumpen, so daß gleichzeitig die Wärme- und Druckverluste sowie der Energieverbrauch reduziert werden. Neben dem geringeren Bauvolumen und einem geringeren Bauaufwand wird gleichzeitig eine verbesserte Wärmeübertragung erzielt, weil sämtliche Wärmeübertrager in einem gemeinsamen Gehäuse angeordnet sind, so daß sich auch das in den Verbindungsleitungen befindliche Produktvolumen reduziert, wodurch der Verfahrensablauf verbessert wird. Schließlich verringert sich auch der Isolierungsaufwand sowohl für den Behälter als auch für die Verbindungsleitung. Aufgrund der seitlich außerhalb des Gehäuses angeordneten Meß- und Regeleinrichtung kann der Durchlauf des einzudickenden Produktes durch den Verdampfer mit einfachen Mitteln und gezielt gesteuert bzw. geregelt werden, so daß sich insgesamt mit dem erfindungsgemäßen Vorschlag ein Verdampfer ergibt, dessen Auslegung hinsichtlich von dampf- und brüdenseitigem Druckverlust, notwendiger Bedeckung und den geometrischen Abmessungen einfach zu optimieren ist.

Der aus der DE-A 2 309 161 bekannte Mehrstufenverdampfer unterscheidet sich bereits hinsichtlich der Merkmale des Oberbegriffes von dem erfindungsgemäßen Verdampfer, weil bei beiden Ausführungsformen des bekannten Verdampfers der Dampf über die gesamte Höhe des Gehäuses von oben nach unten durch sämtliche Verdampferstufen geführt wird. Es erfolgt somit keine Beheizung eines oberen Wärmeübertragers durch Heizdampf und eine Beheizung der darunterliegenden Verdampfer durch die im obersten Wärmeübertrager entstehenden Brüden. Zwar sind auch bei dem bekannten Mehrstufenverdampfer sämtliche Wärmeübertrager übereinander in einem gemeinsamen Gehäuse angeordnet, der bekannte Mehrstufenverdampfer zeigt aber nicht die weiteren Merkmale der Erfindung.

Bei einem aus der US-A-3 901 768 bekannten Verdampfer handelt es sich um einen Apparat zur Aufbereitung von Seewasser zu Süßwasser. Neben diesem grundlegenden Unterschied hinsichtlich der Gattung wird auch bei diesem bekannten Verdampfer der zur Verdampfung benötigte Dampf durch sämtliche Stufen des Verdampfers geführt.

Bei der aus der DE-A-3 133 803 bekannten Vorrichtung handelt es sich schließlich um einen Apparat zum Konzentrieren wässriger Lösungen von Glykol. Die Vorrichtung umfaßt mehrere in einem gemeinsamen Gehäuse übereinander angeordnete Filmverdampfer. Während der oberste Filmverdampfer mit Frischdampf beheizt wird, erfolgt die Beheizung der darunterliegenden Filmverdampfer durch die Brüden, die im jeweils darüber befindlichen Filmverdampfer entstehen. Diese Brüden werden innerhalb des Gehäuses durch sogenannte Ableitungen dem jeweils darunter befindlichen Filmverdampfer zugeführt. Damit unterscheidet sich der bekannte Apparat außer hinsichtlich seines Einsatzzweckes auch bezüglich der erfindungsgemäßen Merkmale vom anmeldungsgemäßen Verdampfer.

Gemäß einem weiteren Merkmal der Erfindung sind als Wärmeübertrager im Kreuzstrom durchströmte Plattenelemente mittels Trennwänden derart im Gehäuse angeordnet, daß seitlich neben den Plattenelementen Freiräume für die aufsteigenden Brüden gebildet sind.

Mit der Erfindung wird schließlich vorgeschlagen, das Produkt drucklos in den oberen Wärmeübertrager einzuführen und brüdenseitig und/oder dampfseitig Inertgasabzüge zu installieren.

Auf der Zeichnung ist ein Ausführungsbeispiel des erfindungsgemäßen Verdampfers schematisch dargestellt, und zwar zeigt:

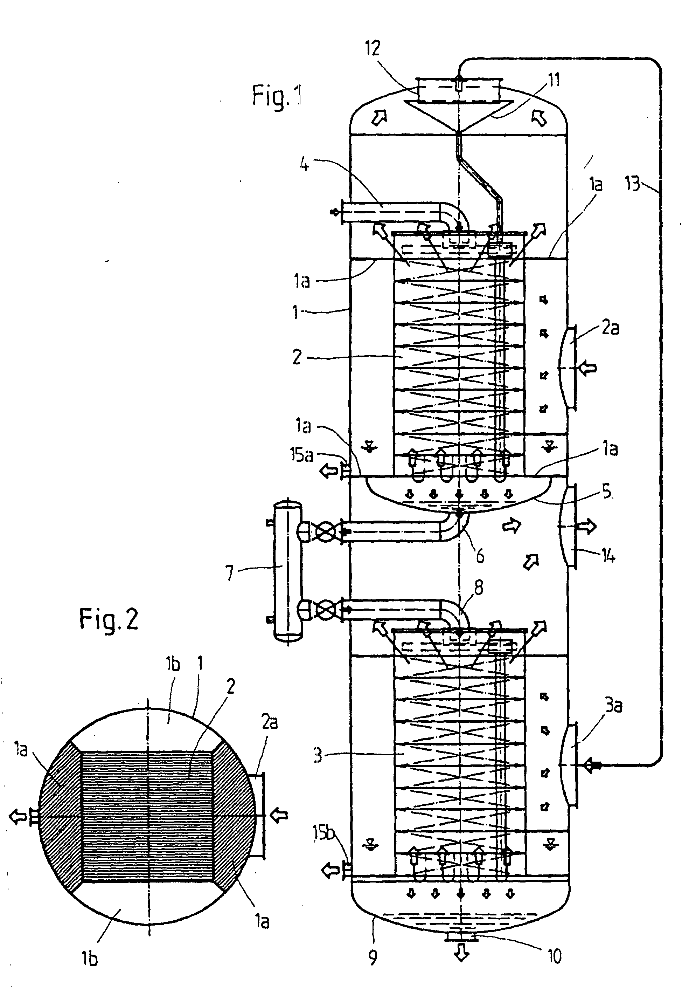

- Fig. 1: einen senkrechten Schnitt durch den Verdampfer und
- Fig. 2: einen waagerechten Schnitt gemäß der Schnittlinie II - II in Fig. 1.

Die Zeichnung zeigt ein rohrförmiges, senkrecht stehendes Gehäuse 1, in dem zwei Wärmeübertrager 2 und 3 angeordnet sind. Bei diesen Wärmeübertragern handelt es sich um aus Plattenelementen gebildete Wärmeübertrager, die im Kreuzstrom durchströmt werden.

Das einzudickende Produkt, beispielsweise Zuckerlösung, wird drucklos durch einen Zuführstutzen 4 der Oberseite des Wärmeübertragers 2 zugeführt und gleichmäßig im Wärmeübertrager 2 verteilt. Das Produkt strömt senkrecht durch den Wärmeübertrager 2 und wird an dessen Unterseite in einer Auffangwanne 5 aufgenommen, die über ein Abflußrohr 6 mit einer Meß- und Regeleinheit 7 verbunden ist. Anschließend gelangt das Produkt über ein Zuflußrohr 8 in den oberen Teil des Wärmeübertragers 3, der ebenfalls von oben nach unten durchströmt wird. Das aus der Unterseite des Wärmeübertragers 3 austretende Produkt wird im Boden 9 des Gehäuses 1 gesammelt und über einen Austrittsstutzen 10 der weiteren Verarbeitung zugeführt.

Um zum Zwecke der Eindickung Wasseranteile aus dem Produkt auszuscheiden, wird der im oberen Teil des Gehäuses 1 angeordnete Wärmeübertrager 2 mit Heizdampf beheizt, der durch einen Heizdampfstutzen 2a eintritt und den Wärmeübertrager 2 im Kreuzstrom zum Produkt durchströmt. Nach dem Durchströmen des Wärmeübertragers 2 kondensiert der Heizdampf. Das Kondensat wird über einen Kondensatstutzen 15a bzw. 15b nach außen abgeführt. Die aus dem erhitzten Produkt austretenden Brüden steigen über seitliche Freiräume 1b in den oberen Teil des Gehäuses 1, werden nach Passieren eines Tröpfchenabscheiders 11 an der Oberseite des Gehäuses 1 durch einen Brüdenstutzen 12 abgezogen und über eine Verbindungsleitung 13 durch einen Stutzen 3a dem unteren Wärmeübertrager 3 zugeführt.

Hier ereignet sich derselbe Vorgang wie beim Wärmeübertrager 2. Das Aufheizen bewirkt ein Ausscheiden von Wasseranteilen aus dem Produkt innerhalb des Wärmeübertragers 3. Die hierbei entstehenden Brüden werden durch einen Abzugsstutzen 14 aus dem Gehäuse 1 abgezogen.

Durch die übereinanderliegende Anordnung der beiden Wärmeübertrager 2 und 3 in einem turmartigen Gehäuse 1 ergibt sich nicht nur ein verringerter Raumbedarf, sondern auch unter Wegfall zusätzlicher Pumpen eine erhebliche Verkürzung der bisher erforderlichen Verbindungsleitungen. Hierdurch verringert sich nicht nur der Bauaufwand einschließlich des Isolieraufwandes, sondern auch die Verweilzeit des Produktes in Verbindungsleitungen, so daß insgesamt die Druck- und Wärmeverluste reduziert werden. Durch eine geeignete Steuerung der in der Meß- und Regeleinheit 7 vorgesehenen Ventile wird sichergestellt, daß der Zu- und Abfluß des einzudickenden Produktes stets den jeweiligen Gegebenheiten optimal angepaßt wird.

### Bezugszeichenliste:

- 1: Gehäuse
- 1a: Trennwand
- 1b: Freiraum
- 2: Wärmeübertrager
- 2a: Heizdampfstutzen
- 3: Wärmeübertrager
- 3a: Stutzen
- 4: Zuführstutzen
- 5: Auffangwanne
- 6: Abflußrohr
- 7: Meß- und Regeleinheit
- 8: Zuflußrohr
- 9: Boden
- 10: Austrittsstutzen
- 11: Tröpfchenabscheider
- 12: Brüdenstutzen
- 13: Verbindungsleitung
- 14: Abzugsstutzen
- 15a: Kondensatstutzen
- 15b: Kondensatstutzen

## Patentansprüche

1. Verdampfer für die Zuckerindustrie zum Eindicken von Zuckerlösung mit mindestens zwei Wärmeübertragern (2, 3), die vom einzudickenden Produkt nacheinander durchströmt werden, wobei der zuerst durchströmte Wärmeübertrager (2) zwecks Ausscheidens von Wasseranteilen (Brüden) aus dem Produkt mit Heizdampf und der bzw. die andere(n) Wärmeübertrager (3) mit diesen Brüden beheizt werden, die im oberen Teil des zuerst vom Produkt durchströmten Wärmeübertragers (2) abgezogen werden, wogegen das eingedickte Produkt jeweils im unteren Teil jedes Wärmeübertragers (2, 3) abgezogen wird und seitlich oberhalb jedes Produktabzuges Kondensatstutzen (15a, 15b) zum Abzug von Kondensat angeordnet sind,
**dadurch gekennzeichnet,**
daß die Wärmeübertrager (2, 3) übereinander in einem gemeinsamen Gehäuse (1) angeordnet sind,
daß die im zuerst vom Produkt durchströmten Wärmeübertrager (2) entstandenen Brüden aus einem an der Oberseite des Gehäuses (1) angeordneten Brüdenstutzen (12) abgezogen und über eine Verbindungsleitung (13) durch einen seitlichen Stutzen (3a) dem jeweils unteren Wärmeübertrager (3) zugeführt werden
und daß das in einer Auffangwanne (5) des oberen Wärmeübertragers (2) aufgefangene Produkt über eine seitlich außerhalb des Gehäuses (1) angeordnete Meß- und Regeleinrichtung (7) dem Produkteintritt des nachfolgenden Wärmeübertragers (3) zugeführt wird.

2. Verdampfer nach Anspruch 1, **dadurch gekennzeichnet**, daß als Wärmeübertrager (2, 3) im Kreuzstrom durchströmte Plattenelemente mittels Trennwänden (1a) derart im Gehäuse (1) angeordnet sind, daß seitlich neben den Plattenelementen Freiräume (1b) für die aufsteigenden Brüden gebildet sind.

3. Verdampfer nach Anspruch 1 oder 2, **dadurch gekennzeichnet**, daß das Produkt drucklos in den oberen Wärmeübertrager (2) eingeführt wird.

4. Verdampfer nach Anspruch 1 oder 2, **dadurch gekennzeichnet**, daß brüdenseitig und/oder dampfseitig Inertgasabzüge installiert sind.

## Claims

1. Evaporator for the sugar industry, for thickening sugar solution, having at least two heat exchangers (2, 3) through which the product to be thickened flows in succession, the heat exchanger (2) through which the product flows first being heated with hot steam for the purpose of separating water fractions (vapours) from the product, and the other heat exchanger(s) (3) being heated by these vapours, which are extracted in the upper part of the heat exchanger (2) through which the product flows first, whereas the thickened product is extracted in each case in the lower part of each heat exchanger (2, 3), and condensate connection pieces (15a, 15b) for the extraction of condensate are arranged laterally above each product extraction point, **characterized in that** the heat exchangers (2, 3) are arranged above one another in a common housing (1), in that the vapours which have formed in the heat exchanger (2) through which the product flows first are extracted from a vapour connection piece (12) arranged on the top side of the housing (1) and are fed to in each case the lower heat exchanger (3) via a connecting line (13) and through a lateral connection piece (3a), and in that the product which is collected in a collection sump (5) of the upper heat exchanger (2) is fed, via a measurement and control device (7) arranged laterally outside the housing (1), to the product inlet of the following heat exchanger (3).

2. Evaporator according to Claim 1, **characterized in that**, as heat exchangers (2, 3), plate elements through which medium flows in cross-current are arranged in the housing (1), by means of partitions (1a), in such a manner that free spaces (1b) for the rising vapours are formed laterally next to the plate elements.

3. Evaporator according to Claim 1 or 2, **characterized in that** the product is introduced into the upper heat exchanger (2) without the use of pressure.

4. Evaporator according to Claim 1 or 2, **characterized in that** inert-gas extraction points are installed on the vapour side and/or on the steam side.

## Revendications

1. Evaporateur pour l'industrie sucrière destiné à l'épaississement de solution de sucre, comportant au moins deux échangeurs de chaleur (2, 3) qui sont traversés successivement par le produit à épaissir, l'échangeur de chaleur (2) traversé en premier lieu étant chauffé par de la vapeur de chauffage dans le but d'éliminer la teneur en eau (buées) du produit, et le ou les autre(s) échangeur(s) de chaleur (3) étant chauffé(s) avec ces buées, qui sont soutirées dans la partie supérieure de l'échangeur de chaleur (2) traversé en premier lieu par le produit, alors que le produit épaissi est soutiré dans la partie inférieure de chaque échangeur de chaleur (2, 3), et des tubulures de condensats (15a, 15b) destinées à l'évacuation de condensats étant disposées latéralement au-dessus de chaque point de soutirage de produit,
**caractérisé en ce que**
les échangeurs de chaleur (2, 3) sont disposés l'un au-dessus de l'autre dans une enveloppe commune (1),
les buées engendrées dans l'échangeur de chaleur (2) traversé en premier lieu par le produit sont soutirées d'une tubulure de buées (12) disposée sur la partie supérieure de l'enveloppe (1), et amenées à l'échangeur de chaleur (3) respectivement inférieur par l'intermédiaire d'une conduite de liaison (13) à travers une tubulure latérale (3a), et
le produit recueilli dans une cuvette de rétention (5) de l'échangeur de chaleur (2) supérieur est amené à l'entrée de produit: de l'échangeur de chaleur (3) suivant par l'intermédiaire d'un dispositif de mesure et de régulation (7) disposé latéralement à l'extérieur de l'enveloppe (1).

2. Evaporateur selon la revendication 1, **caractérisé en ce que**, en tant qu'échangeurs de chaleur (2, 3), des éléments à plateaux traversés à courants croisés sont disposés dans l'enveloppe (1) au moyen de cloisons de séparation (1a) de telle sorte que des espaces libres (1b) soient formés latéralement à côté des éléments à plateaux pour les buées ascendantes.

3. Evaporateur selon la revendication 1 ou 2, **caractérisé en ce que** le produit est introduit sans pression dans l'échangeur de chaleur (2) supérieur.

4. Evaporateur selon la revendication 1 ou 2, **caractérisé en ce que** des soutirages de gaz inerte sont installés du côté buées et/ou du côté vapeur.
